# DEMANDE DE BREVET EUROPEEN

(11) **EP 3 392 887 A1**
(43) Date de publication de la demande: **24.10.2018**
(21) Numéro de dépôt: 18000316.2
(22) Date de dépôt: 03.04.2018
(51) Int. Cl.: H01F 6/06, H01F 6/04

(54) **SYSTEME DE GENERATION D'UN CHAMP MAGNETIQUE VECTORIEL**

(30) Priorité: 03.04.2017 FR 1752841
(71) Demandeur: Commissariat à l'Energie Atomique et aux Energies Alternatives, 75015 Paris (FR)
(72) Inventeur: Daël, Antoine, 92370 Chaville (FR); Lavie, Pascal, 91530 Saint-Cheron (FR)
(74) Mandataire: Cabinet Camus Lebkiri

(57) **Abrégé**

La présente invention concerne un système de génération d'un champ magnétique orientable en trois dimensions (200) configuré pour être intégré dans une enceinte expérimentale dans laquelle règne un milieu ultravide, ledit système de génération d'un champ magnétique vectoriel (200) étant caractérisé en ce qu'il comporte : des bobines supraconductrices (210, 220, 230), des moyens de refroidissement permettant de refroidir les bobines supraconductrices (210, 220, 230) à une température de supraconduction (500) ; un boitier étanche (300), étanche à l'ultravide et compatible avec l'ultravide, ledit boitier étanche (300) renfermant lesdites bobines supraconductrices (210, 220, 230) et étant refroidi par lesdits moyens de refroidissement (500) ; un écran thermique (400) compatible avec l'ultravide entourant ledit boitier étanche (300).

## Description

### DOMAINE TECHNIQUE

L'invention porte sur un dispositif d'intégration permettant d'utiliser dans une enceinte expérimentale existante, et dans laquelle règne un milieu ultravide, un système de génération d'un champ magnétique élevé localement homogène, c'est-à-dire sensiblement homogène dans une région prédéfinie de l'espace, et orientable en trois dimensions, ou au moins dans un plan, à partir d'un ensemble de bobines supraconductrices.

### ETAT DE LA TECHNIQUE

Pour la réalisation de certaines expériences scientifiques, notamment de diffraction ou diffusion de neutrons, il est nécessaire de soumettre un échantillon à un champ magnétique vectoriel orientable dans toutes les directions de l'espace. La demande de brevet EP 2743717 décrit par exemple un nouveau dispositif de génération d'un champ magnétique orientable et/ou tournant et localement homogène présentant à la fois un accès axial pour l'introduction aisée d'un échantillon et une grande ouverture angulaire équatoriale pour permettre le passage de faisceaux de particules (notamment de neutrons) ou photons et la mise en place de systèmes de détection appropriés sur une grande ouverture horizontale et verticale. Le dispositif décrit dans le document EP 2743717 a été développé pour répondre particulièrement aux besoins des études de diffraction et diffusion de neutrons.

Le principe consiste à utiliser un agencement particulier d'un ensemble de bobines supraconductrices coaxiales régulièrement agencées le long d'un cercle pour générer un champ magnétique homogène orienté dans une direction radiale (perpendiculaire à la direction axiale).

Ainsi, il est nécessaire de placer les bobines dans des conditions de supraconduction en respectant des conditions d'isolement thermique qui sont très élaborées et qui demandent beaucoup d'attention et en disposant d'un moyen de refroidissement pour atteindre les très basses températures nécessaires au fonctionnement en supraconduction des bobinages.

De manière générale, le moyen le plus simple pour refroidir les bobines supraconductrices est de les immerger dans de l'hélium liquide à 4,2K. Mais depuis quelques années, certains constructeurs proposent désormais l'utilisation de cryoaimants dont les enroulements sont refroidis au moyen de cryo-générateurs.

Cependant, l'utilisation de telles bobines supraconductrices et de cryo-générateur engendrent certaines difficultés de réalisation dès lors que le vide nécessaire à l'expérimentation est de l'ultravide (i.e. inférieur à 10⁻⁷ mbar).

En effet, l'utilisation d'un cryostat pour placer les bobines dans des conditions de supraconduction dans un milieu où règne l'ultravide, risque de perturber ce vide, dénaturer la qualité des échantillons, notamment par des phénomènes de dégazage, et des remontées de pression, etc.

### EXPOSE DE L'INVENTION

Dans ce contexte, la présente invention vise à résoudre les problèmes mentionnés précédemment et vise à proposer un dispositif permettant d'intégrer un système de génération d'un champ magnétique vectoriel dans une enceinte expérimentale préexistante et dans laquelle l'ultravide est nécessaire pour l'expérimentation. Une telle démarche présente de nombreuses difficultés techniques que l'invention vise à résoudre en proposant des solutions innovantes en magnétisme, et en cryogénie.

La démarche existante classique et connue de l'état de la technique consiste à construire une enceinte expérimentale autour de l'élément principal constitué par les aimants ou bobines nécessaires à l'expérimentation en ménageant une « zone utile d'exploitation » et une « zone échantillon » pour la manipulation, ce qui contraint les architectures des lignes expérimentales et oblige à construire l'expérience autour du dispositif magnétique.

L'invention vise au contraire à proposer un système de génération d'un champ magnétique simple, complet, modulaire et étanche qu'il est possible d'intégrer dans toute enceinte expérimentale existante et notamment dans les enceintes expérimentales où règne un milieu ultravide sans dénaturer l'échantillon ou détruire la manipulation sous ultravide.

A cette fin, l'invention concerne un système de génération d'un champ magnétique orientable en trois dimensions configuré pour être intégré dans une enceinte expérimentale dans laquelle règne un milieu ultravide, ledit système de génération d'un champ magnétique vectoriel étant caractérisé en ce qu'il comporte :
- des bobines supraconductrices,
- des moyens de refroidissement permettant de refroidir les bobines supraconductrices à une température de supraconduction ;
- un boitier étanche, étanche à l'ultravide et compatible avec l'ultravide, ledit boitier étanche renfermant lesdites bobines supraconductrices et étant refroidi par lesdits moyens de refroidissement ;
- un écran thermique compatible avec l'ultravide entourant ledit boitier étanche.

Le principe d'utilisation et l'ensemble des solutions techniques selon l'invention permettent de placer directement le dispositif magnétique supraconducteur dans une enceinte expérimentale existante dans laquelle règne un ultravide lequel ultravide est utilisé pour l'isolation thermique du dit dispositif.

Le terme « compatible à l'ultravide » signifie que les matériaux utilisés sont compatibles avec le milieu ultravide et que la mise en oeuvre (nettoyage, étuvage, process de fabrication) est réalisée de manière à s'assurer que la propreté ou les conditions de l'ultravide ne seront pas dégradées.

L'écran thermique compatible avec l'ultravide entourant ledit boitier étanche est à la fois conducteur thermique et réflecteur thermique.

Le système de génération d'un champ magnétique orientable en trois dimensions selon l'invention peut également présenter une ou plusieurs des caractéristiques ci-dessous, considérées individuellement ou selon toutes les combinaisons techniquement possibles :
- l'écran thermique comporte un élément conducteur thermiquement recouvert d'une couche réflectrice thermiquement ;
- l'élément conducteur thermiquement et/ou la couche réflectrice thermiquement est métallique ;
- l'élément conducteur thermiquement est une tôle métallique conductrice thermiquement en Cuivre ou en Aluminium ;
- l'écran thermique comporte une couche métallique réflectrice thermiquement en Nickel ;
- ledit boitier étanche est formé par un corps massif monobloc ;
- ledit boitier étanche comporte des logements usinés dans ledit corps monobloc pour le positionnement des bobines supraconductrices ;
- ledit corps monobloc est fermé de part et d'autre, de manière étanche, par un flasque d'extrémité ;
- ledit corps monobloc comporte un logement dans lequel des éléments de protection des bobines supraconductrices sont positionnés ;
- ledit boitier étanche comporte des traversées électriques de puissance étanches, isolantes et supraconductrices pour alimenter lesdites bobines supraconductrices ;
- ledit boitier étanche présente un puits central pour permettre le placement d'un échantillon au milieu du champ magnétique généré par lesdites bobines supraconductrices ;
- lesdits moyens de refroidissement permettant de refroidir les bobines supraconductrices à une température de supraconduction sont entourés par un écran thermique compatible avec l'ultravide ;
- le système comporte des amenées de courant et en ce que lesdites amenées de courant sont entourées par un écran thermique ;
- lesdits moyens de refroidissement permettant de refroidir les bobines supraconductrices à une température de supraconduction présentent un premier étage pour le refroidissement dudit écran thermique du boitier étanche et/ou l'écran thermique des moyens de refroidissement et/ou l'écran thermique des amenées de courant et un deuxième étage pour le refroidissement dudit boitier étanche et des bobines supraconductrices à la température de supraconduction, la température dudit premier étanche étant supérieure à la température du deuxième étage ;
- le premier étage refroidit à une température de 50K et le deuxième étage refroidit à une température de 4K ;
- lesdits moyens de refroidissement permettant de refroidir les bobines supraconductrices à une température de supraconduction sont formés par au moins un cryo-générateur.
L'invention a également pour objet une enceinte expérimentale comportant une chambre étanche dans laquelle règne l'ultravide caractérisée en ce que ladite enceinte expérimentale comporte un système de génération d'un champ magnétique orientable en trois dimensions selon l'invention et en ce que l'ultravide de la dite enceinte constitue un vide d'isolement thermique nécessaire au refroidissement des bobines supraconductrices du système de génération de champ magnétique vectoriel.

### BREVES DESCRIPTIONS DES FIGURES

D'autres caractéristiques et avantages de l'invention ressortiront plus clairement de la description qui en est donnée ci-dessous, à titre indicatif et nullement limitatif, en référence à la figure unique qui représente une vue d'ensemble d'une enceinte expérimentale comportant un système de génération d'un champ magnétique vectoriel (orientable en trois dimensions) selon l'invention et plus précisément les amenées de courant, les cryogénérateurs ainsi que le principe de supportage et le système de placement de l'échantillon.

### DESCRIPTION D'AU MOINS UN MODE DE REALISATION

La figure unique représente une enceinte expérimentale 100 présentant une chambre étanche 110 dans laquelle règne un vide très poussé UHV, dit ultravide (c'est-à-dire un vide caractérisé par une pression inférieure à 10⁻⁷ mbar) et qui comporte un système modulaire de génération d'un champ magnétique vectoriel 200 (orientable en trois dimensions) selon l'invention. Une telle enceinte expérimentale 100 peut être utilisée par exemple pour l'étude cristallographique d'un échantillon placé dans ledit champ magnétique vectoriel et sous un faisceau de photons Fₚₕₒₜₒₙₛ.

Un tel système de génération d'un champ magnétique vectoriel 200 (orientable en trois dimensions) selon l'invention a pour avantage de pouvoir être positionné dans la chambre étanche 110 d'une enceinte expérimentale existante sous ultravide et de pouvoir générer un champ magnétique souhaité en s'adaptant au dispositif expérimental sans perturber le milieu ultravide de la manipulation.

Comme illustré sur la figure annexée, le système de génération d'un champ magnétique vectoriel 200 comporte un boitier étanche 300 faisant office de masse froide dans lequel sont insérées des bobines supraconductrices cylindriques 210, 220, 230. Le type de bobine supraconductrice, les dimensions, les branchements ainsi que leur position relative autour de l'échantillon à analyser sont décrits de manière détaillée dans le document EP2743717.Les bobines supraconductrices 210, 220, 230 ainsi que leur disposition particulière permettent de créer un champ magnétique ajustable en grandeur et en direction tout en s'affranchissant de la mise en place de bobines positionnées dans le plan médian de diffraction facilitant ainsi l'observation de l'échantillon dans une grande ouverture angulaire.

Le boitier étanche 300 remplit une première fonction de maintien mécanique des bobines supraconductrices 210, 220, 230, une deuxième fonction de refroidissement des bobines supraconductrices 210, 220, 230 par conduction thermique, et une troisième fonction d'étanchéité du vide cryogénique existant à l'intérieur du boitier étanche 300 par rapport à l'ultravide régnant dans la chambre étanche 110.

Le boitier étanche 300 présente un corps 350 réalisé à partir d'une pièce monobloc usinée dans la masse, réalisée en aluminium, qui comporte des logements 310 usinés très précisément (typiquement au 1/10 de millimètre) pour recevoir et positionner les bobines supraconductrices 210, 220, 230. Les bobines supraconductrices 210, 220, 230 sont avantageusement collées dans les logements 310 de manière à optimiser le contact « thermique » avec le boitier étanche 300 et donc le refroidissement des bobines supraconductrices 210, 220, 230 qui est rendu plus homogène.

Le boitier étanche 300 comporte un réseau de lumières (non représentées) ménagées dans l'épaisseur du boitier étanche pour permettre le passage des différentes alimentations électriques des bobines supraconductrices 210, 220, 230.

Le corps 350 du boitier étanche 300 comporte un premier orifice traversant 305, représenté sensiblement selon un axe horizontal, pour permettre le passage du faisceau de photons Fₚₕₒₜₒₙₛ jusqu'à l'échantillon à analyser, et un deuxième orifice traversant 306 formant un puits en son centre, représenté sensiblement selon un axe vertical, permettant de placer un porte échantillon 120 et un échantillon 10 au centre du champ magnétique formé par les bobines supraconductrices 210, 220, 230 et en face du faisceau de photons Fₚₕₒₜₒₙₛ.

Le système de génération d'un champ magnétique vectoriel 200 comporte également des éléments de protection électrique 380 (typiquement des diodes de protection) des bobines supraconductrices 210, 220, 230 qui sont également intégrés à l'intérieur du boitier étanche 300 et positionnés dans un logement usiné 320 en partie supérieure du boitier étanche 300.

Tous ces logements 310, 320 sont rendus étanches au vide environnant par la mise en place d'un flasque de fermeture supérieur 330 en partie supérieure du boitier étanche 300 et d'un flasque de fermeture inférieur 340 en partie inférieure du boitier étanche 300. Les flasques de fermeture 330, 340 sont bridés sur le corps 350 du boitier étanche 300, par exemple par vissage, et coopèrent avec des joints métalliques compatibles avec l'ultravide et à la température cryogénique, par exemple en Indium. Ainsi, le boitier étanche 300 est rendu complétement hermétique par rapport à l'extérieur.

Pour alimenter les bobines supraconductrices 210, 200 le boitier étanche 300 comporte des passages électriques étanches de puissance 390. Ainsi les passages électriques étanches 390 permettent le raccordement électrique des bobines 210, 220, 230 via les éléments de protection électrique 380 avec des amenées de courant 600 traversant l'enceinte 100. Les passages électriques étanches de puissance 390 permettent, via l'utilisation de fil supraconducteur, de créer une liaison étanche, isolante et supraconductrice entre l'extérieur et l'intérieur du boitier étanche 300 (i.e. à une température de 4K).

La surface extérieure du boitier étanche 300 est traitée de manière à être compatible avec un milieu dans lequel règne l'ultravide (i.e. ne pas dénaturer ou perturber l'ultravide de l'enceinte 110), elle est nettoyable et étuvable à la température de 80°C.

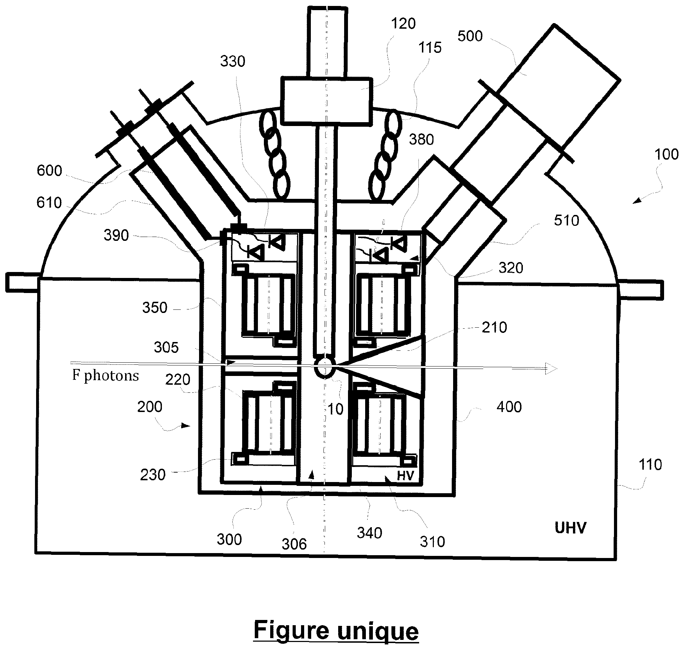

Le boitier étanche 300 est refroidi par des moyens de refroidissement permettant d'atteindre la température de supraconduction. Avantageusement, les moyens de refroidissement sont formés par au moins un cryo-générateur 500 (visible à la figure 1) qui assure le refroidissement des bobines supraconductrices 210, 220, 230 et des éléments de protection électrique 380, à leur température de fonctionnement de 4K grâce notamment à la haute conduction du boitier étanche 300.

Le boitier étanche 300 est protégé au niveau de chacune de ses faces par un écran thermique 400 permettant d'enfermer le boitier étanche 300. L'écran thermique 400, appelé couramment « écran 50K », permet de bloquer tous les rayonnements venant de l'extérieur et d'assurer un écrantage à une température de 50K des pertes par rayonnement et de limiter les apports thermiques sur la masse froide à une température de 4K formée par le boitier étanche 300. L'écran thermique 400 est un écran simple paroi compatible avec l'ultravide, c'est-à-dire qu'il est à la fois conducteur thermique et réflecteur thermique. L'écran thermique 400 permet de créer un isotherme directement dans la chambre étanche 110 de l'enceinte expérimentale 100.

L'écran thermique 400 est fabriqué à partir d'un matériau conducteur thermiquement, avantageusement métallique, par exemple une tôle en cuivre, en aluminium ou en matériau métallique approprié présentant de bonne conductivité thermique.

Selon une variante de réalisation, l'écran thermique 400 comporte un élément conducteur thermiquement par exemple une tôle métallique en cuivre, en aluminium ou en matériau métallique approprié présentant de bonne conductivité thermique, qui recouvre par exemple une âme centrale.

L'écran thermique 400 comporte en surface une couche réflectrice thermiquement recouvrant le matériau conducteur thermiquement.

La couche réflectrice thermiquement est déposée par exemple par voie chimique, électrochimique ou physique. La couche réflectrice thermiquement présente une émissivité de l'ordre de 0,030 et permet de s'affranchir de la présence de couches de super isolants dans l'enceinte qui seraient incompatibles avec l'ultravide. La couche réflectrice est par exemple une couche métallique composée de nickel.

Ainsi, l'écran thermique 400 autour du boitier étanche 300 joue le rôle d'un écran thermique intermédiaire dont la fonction est de créer une surface isotherme intermédiaire autour du boitier étanche 300, en bénéficiant de la puissance de refroidissement d'un premier étage 50k du cryogénérateur 500. L'écran thermique 400 permet également de limiter les pertes radiatives sur le boitier étanche 300 contenant les bobines supraconductrices qui est refroidi à une température de 4K.Les amenées de courant 600 sont également placées à l'intérieur d'un écran thermique 610 refroidi à une température de 50K. L'écran thermique 610 est relié mécaniquement à l'écran thermique 400 principal positionné autour du boitier étanche 300.

Le cryo-générateur 500 est également placé à l'intérieur d'un écran thermique 510 refroidi à une température de 50K. L'écran thermique 510 est relié mécaniquement et l'écran thermique 400 principal positionné autour du boitier étanche 300.

Le cryo-générateur 500 est un cryo-générateur à deux étages, c'est-à-dire qu'il comporte un premier étage permettant de refroidir l'écran thermique 400, l'écran thermique 610 des amenées de courant 600 et l'écran thermique 510 du cryo-générateur 500 à une température de 50K et un deuxième étage permettant de refroidir le boitier étanche 300 ainsi que les bobines supraconductrices 210, 220, 230 à une température de 4K.

Avantageusement, l'écran thermique 610 des amenées de courant 600 et l'écran thermique 510 du cryogénérateur 500 sont de même nature que l'écran thermique 400 autour du boitier étanche 300 contenant les bobines supraconductrices.

Le boitier étanche 300 est maintenu dans l'enceinte expérimentale par des moyens ad hoc, tels que par exemple une ou plusieurs chaines 115 formées par des mailles métalliques qui sont isolées les unes des autres par des pièces en époxy permettant ainsi de créer un découplage thermique.

## Revendications

1. Système de génération d'un champ magnétique orientable en trois dimensions (200) configuré pour être intégré dans une enceinte expérimentale dans laquelle règne un milieu ultravide, ledit système de génération d'un champ magnétique vectoriel (200) étant **caractérisé en ce qu'**il comporte :
- des bobines supraconductrices (210, 220, 230),
- des moyens de refroidissement permettant de refroidir les bobines supraconductrices (210, 220, 230) à une température de supraconduction (500) ;
- un boitier étanche (300), étanche à l'ultravide et compatible avec l'ultravide, ledit boitier étanche (300) renfermant lesdites bobines supraconductrices (210, 220, 230) et étant refroidi par lesdits moyens de refroidissement (500) ;
- un écran thermique (400) compatible avec l'ultravide entourant ledit boitier étanche (300).

2. Système de génération d'un champ magnétique orientable en trois dimensions (200) selon la revendication 1, **caractérisé en ce que** l'écran thermique (400) comporte un élément conducteur thermiquement recouvert d'une couche réflectrice thermiquement.

3. Système de génération d'un champ magnétique orientable en trois dimensions (200) selon la revendication 2, **caractérisé en ce que** l'élément conducteur thermiquement et/ou la couche réflectrice thermiquement est métallique.

4. Système de génération d'un champ magnétique orientable en trois dimensions (200) selon la revendication 2, **caractérisé en ce que** l'élément conducteur thermiquement est une tôle métallique conductrice thermiquement en Cuivre ou en Aluminium.

5. Système de génération d'un champ magnétique orientable en trois dimensions (200) selon l'une quelconque des revendications 2 à 4, **caractérisé en ce que** l'écran thermique (400) comporte une couche métallique réflectrice thermiquement en Nickel.

6. Système de génération d'un champ magnétique orientable en trois dimensions (200) selon l'une quelconque des revendications 1 à 5, ledit boitier étanche (300) est formé par un corps massif monobloc (350).

7. Système de génération d'un champ magnétique orientable en trois dimensions (200) selon la revendication 6, **caractérisé en ce que** ledit boitier étanche (300) comporte des logements (310) usinés dans ledit corps monobloc (350) pour le positionnement des bobines supraconductrices (210, 220, 230).

8. Système de génération d'un champ magnétique orientable en trois dimensions (200) selon l'une quelconque des revendications 6 à 7, **caractérisé en ce que** ledit corps monobloc (350) est fermé de part et d'autre, de manière étanche, par un flasque d'extrémité (330, 340).

9. Système de génération d'un champ magnétique orientable en trois dimensions (200) selon l'une quelconque des revendications 6 à 8, **caractérisé en ce que** ledit corps monobloc (350) comporte un logement (320) dans lequel des éléments de protection (380) des bobines supraconductrices sont positionnés.

10. Système de génération d'un champ magnétique orientable en trois dimensions (200) selon l'une quelconque des revendications 1 à 9, **caractérisé en ce que** ledit boitier étanche (300) comporte des traversées électriques de puissance (390) étanches, isolantes et supraconductrices pour alimenter lesdites bobines supraconductrices (210, 220, 230).

11. Système de génération d'un champ magnétique orientable en trois dimensions (200) selon l'une quelconque des revendications 1 à 10, **caractérisé en ce que** ledit boitier étanche (300) présente un puits central (306) pour permettre le placement d'un échantillon (10) au milieu du champ magnétique généré par lesdites bobines supraconductrices (210, 220, 230).

12. Système de génération d'un champ magnétique orientable en trois dimensions (200) selon l'une quelconque des revendications 1 à 11, **caractérisé en ce que** lesdits moyens de refroidissement (500) permettant de refroidir les bobines supraconductrices (210, 220, 230) à une température de supraconduction (500) sont entourés par un écran thermique (510) compatible avec l'ultravide.

13. Système de génération d'un champ magnétique orientable en trois dimensions (200) selon l'une quelconque des revendications 1 à 12 **caractérisé en ce qu'**il comporte des amenées de courant (600) et **en ce que** lesdites amenées de courant (600) sont entourées par un écran thermique (610).

14. Système de génération d'un champ magnétique orientable en trois dimensions (200) selon l'une quelconque des revendications 1 à 13 **caractérisé en ce que** lesdits moyens de refroidissement (500) permettant de refroidir les bobines supraconductrices (210, 220, 230) à une température de supraconduction présentent un premier étage pour le refroidissement dudit écran thermique (400) du boitier étanche (300) et/ou l'écran thermique (510) des moyens de refroidissement (500) et/ou l'écran thermique (610) des amenées de courant (600) et un deuxième étage pour le refroidissement dudit boitier étanche (300) et des bobines supraconductrices (210, 220, 230) à la température de supraconduction, la température dudit premier étanche étant supérieure à la température du deuxième étage.

15. Système de génération d'un champ magnétique orientable en trois dimensions (200) selon l'une quelconque des revendications 1 à 14 **caractérisé en ce que** lesdits moyens de refroidissement (500) permettant de refroidir les bobines supraconductrices (210, 220, 230) à une température de supraconduction (500) sont formés par au moins un cryo-générateur.

16. Enceinte expérimentale (100) comportant une chambre étanche (110) dans laquelle règne l'ultravide **caractérisée en ce que** ladite enceinte expérimentale (100) comporte un système de génération d'un champ magnétique orientable en trois dimensions (200) selon l'une des revendications 1 à 15 et **en ce que** l'ultravide de la dite enceinte (100) constitue un vide d'isolement thermique nécessaire au refroidissement des bobines supraconductrices du système de génération de champ magnétique vectoriel (200).
